# EUROPÄISCHE PATENTANMELDUNG

(11) **EP 4 687 030 A1**
(43) Veröffentlichungstag der Anmeldung: **04.02.2026**
(21) Anmeldenummer: 25191160.8
(22) Anmeldetag: 23.07.2025
(51) Int. Cl.: G06F 8/61, G06F 21/64

(54) **VERFAHREN UND VORRICHTUNG ZUR ERZEUGUNG UND ZUM VERGLEICH VON SIGNATUREN VON SOFTWAREPAKETEN**

(30) Priorität: 31.07.2024 DE 102024121843
(71) Anmelder: DMG MORI Digital GmbH, 33689 Bielefeld (DE)
(72) Erfinder: DO-KHAC, Dennis, 87435 Kempten (DE)
(74) Vertreter: MERH-IP Matias Erny Reichl Hoffmann Patentanwälte PartG mbB

(57) **Zusammenfassung**

Die vorliegende Erfindung betrifft ein Verfahren zur Erzeugung und zum Vergleich von Signaturen von Softwarepaketen. Dabei werden verschiedene digitale Objekte bestimmt, die mit einem Softwarepaket in Verbindung gebracht werden. Aus diesen digitalen Objekten kann dann mittels eines Hash-Verfahrens jeweils ein Hash-Wert für die einzelnen digitalen Objekte erzeugt werden. Diese Hash-Werte können im nächsten Schritt als Signatur für das Softwarepaket zusammengeführt werden. Durch diese Art der Signatur kann ein bestimmtes Softwarepaket, bzw. eine Version eines Softwarepakets, bzw. eine bestimmte Variante eines Softwarepakets eindeutig bestimmt werden. Werden diese Hashwerte bei Erstellen des Softwarepakets abgespeichert, so kann später in allen möglichen Anwendungen, zum Beispiel bei Software für Werkzeugmaschinen, einfach und sicher überprüft werden, ob es sich um eine modifizierte Variante des Softwarepakets, eine veraltete Version des Softwarepakets oder ähnliches handelt. Auf diese Weise kann mittels Folgemaßnahmen einer solchen Prüfung sichergestellt werden, dass nur vom Ersteller der Software freigegebene Varianten für den vorgesehen Zweck verwendet werden. Dies erhöht die Sicherheit insbesondere bei Software, die auf Werkzeugmaschinen verwendet wird, und deren ungewollte Modifikation zu erheblichen Schäden führen kann.

## Beschreibung

### Beschreibung

Die vorliegende Erfindung betrifft eine Vorrichtung und ein Verfahren zur Erzeugung und zum Vergleich von Signaturen von Softwarepaketen. Diese Signaturen werden auf Basis von Hash-Werten verschiedenster digitaler Objekte erstellt, die mit der Software in Verbindung gebracht werden. Dadurch kann sicher und einfach (automatisiert) festgestellt werden, ob ein Softwarepaket anhand seiner Signaturen durch Abgleich mit einer Signaturdatenbank identifiziert werden kann, bzw. ob es nachträglich verändert wurde.

### Hintergrund der Erfindung

Steuerungen für Werkzeugmaschinen kombinieren häufig diverse Softwaresysteme, die je nach eingesetzter Steuerung auf gängigen Windows- oder Linux-Betriebssystemen aufbauen, in einigen Fällen aber auch proprietäre Entwicklungen sind. Um ein bestimmtes Softwarepaket identifizieren zu können, werden dem Softwarepaket üblicherweise Informationen in einem bestimmten Format hinzugefügt. Die Formate für diese Art von Informationen sind allerdings nicht standardisiert und variieren daher je nachdem woher die Software bezogen wird. Teilweise werden die Informationen separat in Form von Metadaten hinzugefügt, beispielsweise als .xml Datei. Alternativ werden die Informationen als kodierter Teil des Softwarepakets selbst abgespeichert. Weiterhin kann es auch vorkommen, dass überhaupt keine Metadaten für ein bestimmtes Softwarepaket vorhanden sind.

Zusammengefasst kann somit festgestellt werden, dass die Informationen, die zur Identifikation eines Softwarepakets dienen, in einem Format vorliegen, das leicht manipuliert werden kann, ein Zugriff schwierig ist, da ein Format der Abspeicherung möglicherweise unbekannt ist, oder überhaupt keine Informationen abgerufen werden können. Somit ist mitunter nicht für alle relevanten Software-Anteile einer Werkzeugmaschinensteuerung eine automatisierte Identifikation möglich. Ferner kann eine Modifikation eines Softwarepakets folglich nur unter hohem Aufwand (manuelle Überprüfung aller relevanten Daten) oder überhaupt nicht festgestellt werden.

Eine Aufgabe der Erfindung ist es daher, ein Verfahren und eine Vorrichtung bereitzustellen, um eine eindeutige und automatisierte Identifikation von Softwarepakten bei Werkzeugmaschinen zu ermöglichen.

### Detaillierte Beschreibung der Erfindung

Zur Lösung der vorstehend genannten Aufgaben werden die Merkmale der unabhängigen Ansprüche vorgeschlagen. Die abhängigen Ansprüche betreffen bevorzugte Ausführungsbeispiele der vorliegenden Erfindung.

Die Erfindung gibt ein Verfahren und eine Vorrichtung zur Erzeugung und zum Vergleich von Signaturen von Softwarepaketen an. Zu diesem Zweck werden digitale Objekte bestimmt, die zu einem Softwarepaket gehören. Dabei kann es sich beispielsweise um Installationsdateien des Softwarepakets, um Speicherabbilder des installierten Softwarepakets, oder sonstige auch binär repräsentierbare Daten des Softwarepakets handeln. Bei den Speicherabbildern kann es sich um Speicherabbilder von speicherprogrammierbaren Steuerungs-, SPS, Computerized Numerical Control, CNC, oder Human Machine Interface, HMI, Systemen handeln. Bevorzugt werden Speicher-Teilabbilder der HMI-, CNC- oder SPS-Systeme der Steuerung betrachtet. Die Speicher-Teilabbilder werden beispielsweise aufgrund von statistisch erfassten Erkenntnissen oder Vorgaben des Softwareherstellers oder Systemintegrators festgelegt. So können beispielsweise Regeln definiert werden, um Teilabbilder basierend auf ihrer Bedeutung oder ihres Zwecks für das Softwarepaket auswählen zu können. Dadurch kann beispielsweise ein Teil des Speicherabbilds, der invariant gegenüber Input und Output des Softwarepakets ist, basierend auf einer Struktur dieses Teils des Speicherabbilds ausgewählt werden. Als Softwarepaket wird eine einzelne Software oder eine Sammlung von verschiedener Software, die einem gemeinsamen Zweck dienen, aufgefasst. Nachdem die digitalen Objekte bestimmt wurden, wird für die digitalen Objekte pro Objekt jeweils ein Hash-Wert bestimmt. Diese Hash-Werte werden dann zu einer Signatur für das Softwarepaket zusammengefasst. Diese Signatur ermöglicht es ein bestimmtes Softwarepaket eindeutig identifizieren zu können. So kann diese Signatur beispielsweise bei Erstellung des Softwarepakets oder bei Installation des Softwarepakets erstellt werden. Zu einem späteren Zeitpunkt kann dann die Signatur erneut erstellt werden und mit der ursprünglichen Signatur verglichen werden. Somit kann festgestellt werden, ob das Softwarepaket nach der ursprünglichen Erstellung oder Installation verändert wurde. Dieser Vergleich kann völlig automatisiert (beispielsweise periodisch) vonstattengehen und bedarf keinerlei zusätzlicher Metadaten.

Bevorzugt handelt es sich bei den Softwarepaketen um Steuerungssoftware für Werkzeugmaschinen. Unter dem Begriff Werkzeugmaschine werden die Werkzeugmaschine selbst, aber auch automatisierte Anlagen, die mit der Werkzeugmaschine in Verbindung stehen (beispielsweise eine automatisierte Beschickung), aufgefasst. Da Werkzeugmaschinen oft proprietäre Systeme für die Softwareinstallation verwenden, ist eine systemunabhängige Überprüfung der Datenintegrität der Softwareinstallation von besonderem Vorteil. Weiterhin können versehentliche oder mutwillige Modifikationen der Softwareinstallation schnell und einfach festgestellt werden, selbst wenn sie nur ein Speicherabbild der Steuerung der Werkzeugmaschine betreffen.

Bevorzugt umfasst das SPS-Speicherabbild, das HMI-Speicherabbild und/oder das CNC-Speicherabbild ausschließlich ein Teilspeicherabbild eines entsprechenden gesamten Speicherabbilds.

Vorteilhaft wird das Teilspeicherabbild basierend auf vordefinierten Regeln ausgewählt und die vordefinierten Regeln beruhen auf einem Verwendungszweck verschiedener Teilbereiche eines Speicherabbilds für das Softwarepaket.

Bevorzugt werden die digitalen Objekte des Softwarepakets durch extrahieren der digitalen Objekte aus der Steuereinheit der Werkzeugmaschine bestimmt. Dies kann zum einen einmalig direkt nach der Installation, und dann beispielsweise periodisch durchgeführt werden, um eine ständige Überprüfung zu gewährleisten. Vorteilhaft können Dateien aus den Teilsystemen kopiert werden und Speicherabbild-Teilauszüge können über die Schnittstellen bezogen werden, die von den Steuerungen für den Maschinenhersteller bereitgestellt werden. Kommunikationstelegramme ließen sich über die ihnen zugrunde liegenden Kommunikationsprotokolle erreichen.

Vorteilhaft kann die Integritätsprüfung des ersten Softwarepakets periodisch stattfinden.

Weiterhin kann das Bestimmen der digitalen Objekte auch das Auslesen eines Datenspeichers umfassen, auf dem das Softwarepaket installiert ist oder betrieben wird.

Bevorzugt werden nicht für alle digitalen Objekte Hash-Werte erzeugt, sondern nur für eine Teilmenge. Die Teilmenge kann basierend auf einer Relevanz der einzelnen digitalen Objekte für das Softwarepaket bestimmt werden. Die Hash-Werte werden dann nur für die digitalen Objekte in der ausgewählten Teilmenge erzeugt. Die Relevanz der digitalen Objekte kann zum einen auf einer Art (beispielsweise Dateiart) der digitalen Objekte basieren, oder über einer Statistik, die die Veränderung der digitalen Objekte über mehrere Versionen des gleichen Softwarepakets widerspiegelt (Varianz der digitalen Objekte), bestimmt werden. Der Hersteller eines bestimmten Software-Pakets kann aufgrund seiner Detailkenntnis der Software und ihrer Laufzeiteigenschaften eine besonders zweckdienliche Auswahl relevanter Hashwerte festlegen. Zur Auswertung von Teilmengen eines Speicherabbilds einer Software bietet dies mitunter vorteilhafte Betriebseigenschaften.

Bevorzugt werden die Hash-Werte der digitalen Objekte über die Anwendung eines Hash-Algorithmus auf die einzelnen digitalen Objekte erzeugt. Hier können gängige Verfahren wie MD-5, RIPEMD-160, SHA oder Whirlpool zum Einsatz kommen. Bevorzugt kann die Signatur aus den Hash-Werten erstellt werden, indem die einzelnen Hash-Werte in einer Hash-Tabelle abgespeichert werden. Dies ermöglicht eine genaue Ausgabe der Unterschiede (unterschiedliche Hash-Werte) von zwei miteinander verglichenen Softwarepaketen bzw. Signaturen verschiedener Softwarepakete.

Alternativ kann aus den einzelnen Hash-Werten ein Gesamt-Hash-Wert erzeugt werden. Dies kann wiederum durch die Anwendung eines gängigen Hash-Algorithmus durchgeführt werden. Durch den Vergleich eines einzelnen Hash-Werts wird ein Vergleich zweier Softwarepakete besonders einfach und effizient.

Alternativ können die einzelnen Hash-Werte und ein gesamter Hash-Wert abgespeichert werden. Somit könnte der gesamte Hash-Wert beider Softwarepakete verglichen werden und nur bei Ungleichheit der beiden Hashwerte würde ein Einzelvergleich stattfinden. Auf diese Weise kann die Integrität eines Softwarepakets effizient überprüft werden, um bei Bedarf eine genauere Analyse der Unterschiede vorzunehmen.

Optional können zusätzlich Metadaten für das Softwarepakets erzeugt werden. Diese Metadaten können beispielsweise die Kennung, eine Versionsnummer oder eine Inhaltsangabe des Softwarepakets sein. Diese Metadaten können beispielsweise automatisiert aus den vorhanden digitalen Objekten ermittelt werden.

Bevorzugt kann eine initial erstellte Signatur (nach Erstellung oder Installation der Software) auf einem lokalen Computer oder einem Server abgespeichert werden. Der lokale Computer oder der Server können dann zum Zweck des Signaturvergleichs mit dem Medium verbunden werden, auf dem das Softwarepaket installiert ist und verwendet wird, beispielsweise auf einer Steuereinheit einer Werkzeugmaschine. Der lokale Computer kann sowohl kabelgebunden als auch kabellos mit der Steuereinheit der Werkzeugmaschine verbunden sein. Durch Verwendung eines Severs kann eine einfache und fremdgesteuerte (beispielsweise vom Maschinen- oder Softwarehersteller) Überprüfung der installierten Software durchgeführt werden. Dem gegenüber hat der lokale Computer den Vorteil die Überprüfung durchführen zu können, ohne dass Daten extern übermittelt werden müssen.

Bevorzugt handelt es sich bei den Softwarepaketen deren Signaturen verglichen werden um identische Softwarepakete, um ein originales und ein manipuliertes Softwarepaket, um zwei verschiedene Versionen eines Softwarepakets, um eine unmodifizierte und eine modifizierte Variante eines Softwarepakets, oder zwei völlig unterschiedliche Softwarepakete.

In einer vorteilhaften Weiterbildung kann das Zusammenführen der Hash-Werte zur ersten Signatur des ersten Softwarepakets folgendes umfassen: Erzeugen der ersten Signatur indem aus den Hash-Werten ein Gesamt-Hash-Wert erzeugt wird. Weiter vorteilhaft kann das Vergleichen der ersten Signatur mit der zweiten Signatur folgendes umfassen: Vergleichen des Gesamt-Hash-Werts der ersten Signatur mit einem Gesamt-Hash-Wert der zweiten Signatur.

Bevorzugt kann der Vergleich zweier Softwarepakete verwendet werden, um die Integrität eines Softwarepakets zu überprüfen, eine Version eines Softwarepakets zu bestimmten (Vergleich mit mehreren Signaturen die zu verschiedenen Versionen des Softwarepakets gehören), zur Erkennung von Mehrfachinstallation des gleichen Softwarepakets, oder zur Erkennung von Installationen verschiedener Versionen des gleichen Softwarepakets.

Im Falle eines Vergleiches aller Hash-Werte zweier Softwarepakete, kann die Ausgabe dieses Vergleichs bevorzugt für einen effizienten Updateprozess eines Softwarepakets verwendet werden. Dabei wird die Signatur der aktuellen Version des Softwarepakets mit der auf dem Medium (beispielsweise Steuereinheit einer Werkzeugmaschine) installierten Version des Softwarepakets (also deren erzeugter Signatur) verglichen. Dabei werden alle Hash-Werte ausgegeben, die nicht übereinstimmen. Ausgehend von den nicht übereinstimmenden Hash-Werten, werden dann vom Softwarehersteller die Dateien ausgewählt, die diesen Hash-Werten entsprechen, und zum Update des installieren Softwarepakets bereitgestellt. Somit kann über den Vergleich der einzelnen Hash-Werte ein optimierter Softwareupdate Prozess durchgeführt werden und die zu übertragende Datenmenge ist minimiert, da nur die sich unterscheidenden Dateien übertragen werden müssen.

Vorteilhaft kann zudem ein computerlesbares Speichermedium vorgeschlagen werden, das das Computerprogramm nach einem der vorgenannten Aspekte speichert.

Aspekte der vorliegenden Offenbarung können über eine Vorrichtung implementiert werden. Die Vorrichtung kann einen Prozessor und einen mit dem Prozessor verbundenen Speicher umfassen. Der Prozessor kann so ausgelegt sein, dass er das Verfahren gemäß den Aspekten und Ausführungsformen der vorliegenden Offenbarung ausführt.

Aspekte der vorliegenden Offenbarung können durch ein Programm implementiert werden. Wenn Anweisungen des Programms von einem Prozessor ausgeführt werden, kann der Prozessor Aspekte und Ausführungsformen der vorliegenden Offenbarung ausführen. Ein computerlesbares Speichermedium kann das Programm speichern. Solche computerlesbaren Speichermedien können Speichervorrichtungen wie die hierin beschriebenen umfassen, einschließlich, aber nicht beschränkt auf RAM-Vorrichtungen (Random Access Memory), ROM-Vorrichtungen (Read-Only Memory) usw.. Dementsprechend können einige innovative Aspekte des in dieser Offenbarung beschriebenen Gegenstandes über ein oder mehrere computerlesbare Speichermedien mit darauf gespeicherter Software implementiert werden.

Es wird deutlich, dass die Merkmale der Vorrichtung und die Verfahrensschritte in vielerlei Hinsicht ausgetauscht werden können. Insbesondere können die Details der offengelegten Verfahren durch die entsprechende Vorrichtung realisiert werden und umgekehrt. Darüber hinaus gelten alle obigen Aussagen, die sich auf die Verfahren beziehen, in gleicher Weise für die entsprechende Vorrichtung und umgekehrt.

### Kurzbeschreibung der Figuren

- **Figur 1:**: zeigt ein Flussdiagramm eines Ausführungsbeispiels des Verfahrens zur Erzeugung und zum Vergleich von Signaturen von Softwarepaketen
- **Figur 2:**: zeigt eine schematische Darstellung eines Ausführungsbeispiels des Erzeugungsabschnitts des angegebenen Verfahrens
- **Figur 3:**: zeigt eine schematische Darstellung eines Ausführungsbeispiels des Auswahlverfahrens der Hash-Werte für die Signatur
- **Figur 4:**: zeigt eine schematische Darstellung eines Ausführungsbeispiels des Vergleichs zweier Signaturen
- **Figur 5:**: zeigt eine schematische Darstellung eines Ausführungsbeispiels der Vorrichtung zur Erzeugung und zum Vergleich von Signaturen von Softwarepaketen

### Detaillierte Beschreibung bevorzugter Ausführungsformen

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

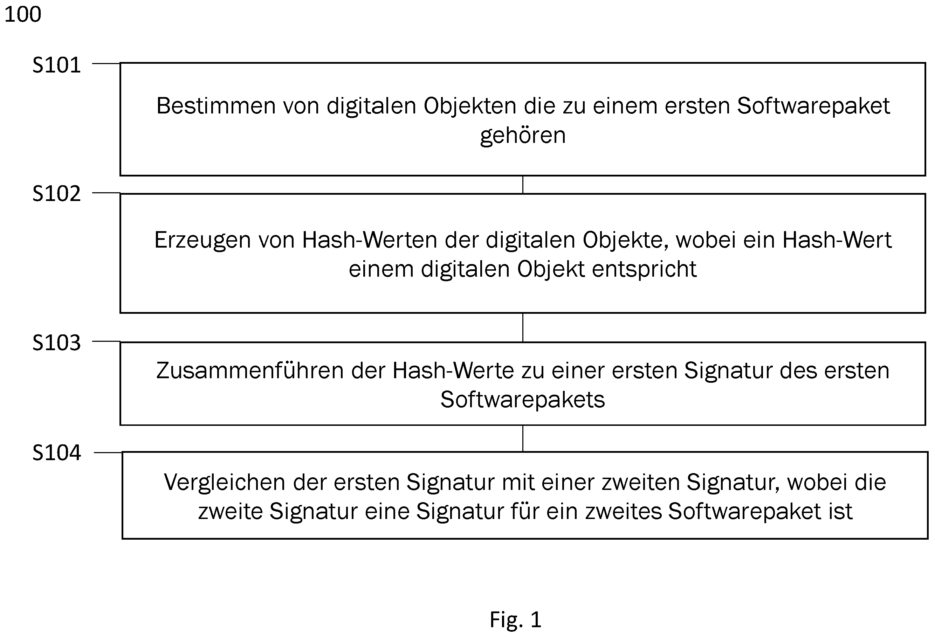

Figur 1 zeigt ein Ausführungsbeispiels des Verfahrens zur Erzeugung und zum Vergleich von Signaturen von Softwarepaketen.

In einem ersten Schritt **S101** werden digitale Objekte bestimmt bzw. identifiziert, die zu einem Softwarepaket gehören. Beim Softwarepaket kann es sich um ein Softwarepaket vor einer Installation oder nach einer Installation handeln. Davon abhängig können dann verschiedene digitale Objekte des Softwarepakets bestimmt werden. Die einzige Bedingung für diese digitalen Objekte ist, dass aus diesen ein Hash-Wert erstellt bzw. erzeugt werden kann. Vorteilhaft sind die digitalen Objekte eines oder mehrere der folgenden Objekte:
- Dateien vor der Installation einer Software
- Dateien nach Abschluss der Installation einer Software
- Dateien, die von einer Software zur Laufzeit erzeigt werden
- der gesamte oder gezielt oder ungezielt festgelegte Teilbereich des Speicherabbilds der Software zu ihrer Laufzeit
- Kommunikationstelegramme oder Teile davon, die von der Software zu ihrer Laufzeit erzeugt und versendet werden.
- Kennungen/Seriennummer von Hardware-Firmware, wie später im Text auch bereits angeführt wird.

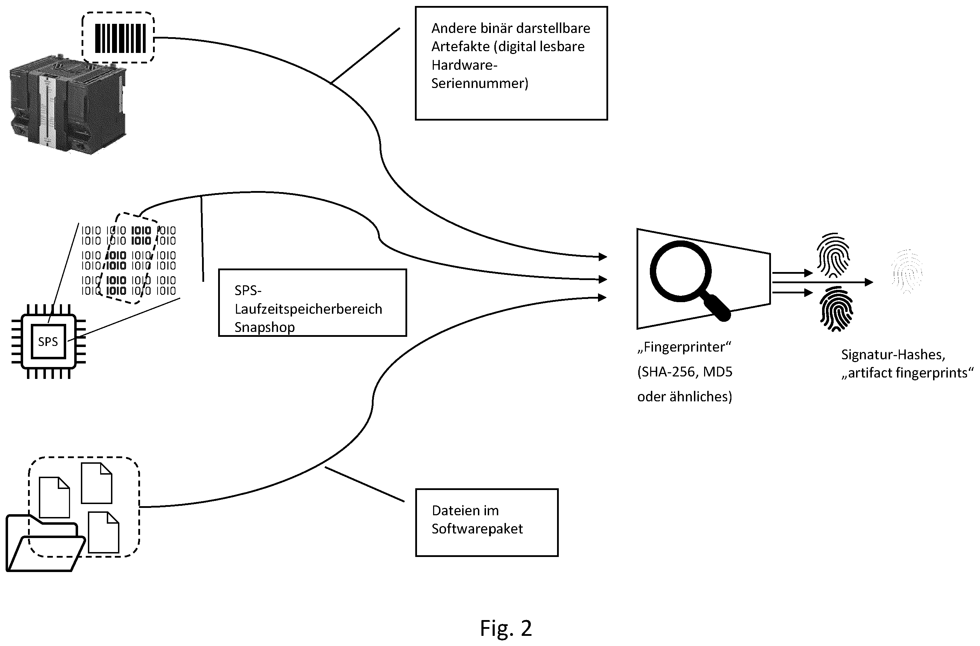

Wie in Figur 2 zu sehen ist, können verschiedenste Objekte, die mit dem Softwarepaket in Verbindung gebracht werden, genutzt werden. Unabhängig von der Anwendung können Dateien des Softwarepakets bestimmt bzw. identifiziert werden. Beispielsweise kann es sich um Dateien vor der Installation des Softwarepakets oder um Dateien nach Abschluss der Installation des Softwarepakets handeln. Weiterhin kann es sich um Dateien handeln, die während der Laufzeit vom Softwarepaket erstellt werden. Zusätzlich können auch Kommunikationstelegramme oder Teile davon, die durch das Softwarepaket während der Laufzeit erstellt oder versendet werden, verwendet werden. In speziellen Anwendungsfällen können weitere digitale Objekte bestimmt werden, die zur Signaturerstellung geeignet sind. So existiert bei der Steuerungvon Werkzeugmaschinen ein Laufzeitspeicherbereich beispielsweise für die Teilsysteme HMI, CNC und SPS (PLC), von denen ein Abbild nach der Installation der Software erstellt werden kann. Dieses Abbild eignet sich ebenfalls zur Identifikation des Softwarepakets und wird somit hier auch als digitales Objekt des Softwarepakets aufgefasst. Weiterhin können auch noch andere binär darstellbare Artefakte verwendet werden, wie beispielsweise eine digital lesbare Hardware-Seriennummer, Typenkennung oder Revisionskennung eines Hardwaremoduls, dass mit dem Softwarepaket in Verbindung steht. Es können besonders vorteilhaft auch Teilsysteme einer Steuerung erfasst werden, denen keine im klassischen Sinne Firmware oder Software innewohnt, beispielsweise wenn eine Steuerung für Teilfunktionen ASICs verwendet. Wenn diese Kennungsangaben aber dem Systemintegrator, also über Schnittstellen zugänglich gemacht werden, dann können diese ebenso dem erfindungsgemäßen Verfahren unterworfen werden.

Um die digitalen Objekte zur Identifikation des Softwarepakets zu bestimmen, kann es in Abhängigkeit der Art des digitalen Objekts notwendig sein, die digitalen Objekte zu extrahieren bzw. auszulesen. Beispielsweise müssen Dateien oder Speicherabbilder von einem Massenspeicher oder einer Steuerung einer Werkzeugmaschine kopiert, bzw. ausgelesen werden, um diese in den folgenden Schritten zur Signaturerstellung zu verwenden.

Nachdem alle digitalen Objekte eines Softwarepakets bestimmt wurden, wird in Schritt **S102** ein Hash-Wert bzw. ein digitaler Fingerabdruck für die einzelnen digitalen Objekte generiert bzw. erzeugt. Zu diesem Zweck kann auf bekannte Hash-Algorithmen zugegriffen werden, wie beispielsweise MD-5, RIPEMD-160, SHA oder Whirlpool.

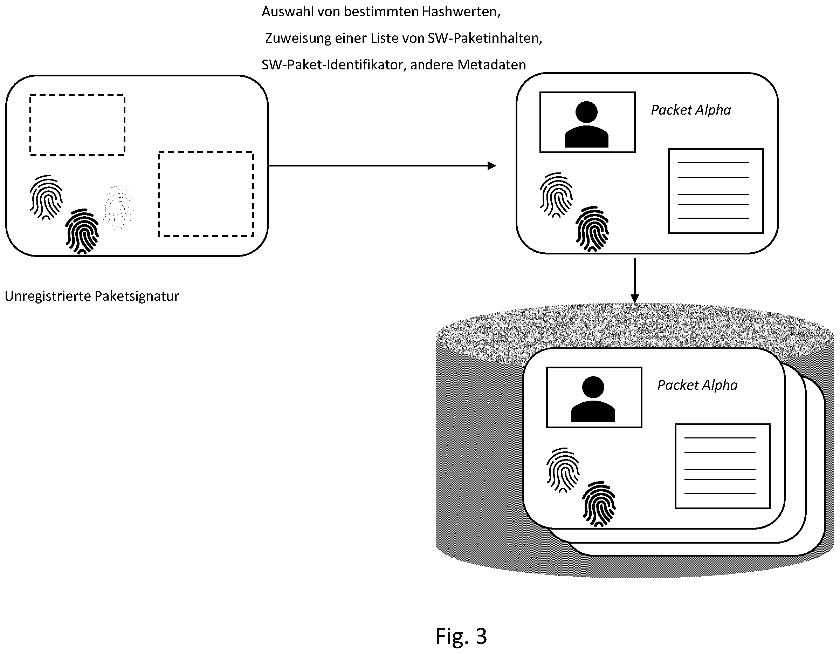

Bevor die Signatur aus den Hash-Werten erzeugt wird, kann optional eine Vorauswahl von bestimmten Hash-Werten erfolgen. Diese Vorauswahl wird in Figur 3 veranschaulicht. Die Vorauswahl kann dazu dienen, die Anzahl der Hash-Werte zu reduzieren, und auf die Hash-Werte zu begrenzen, die, entsprechend den zugehörigen digitalen Objekten, am aussagekräftigsten für das Softwarepaket sind. Die Auswahl dieser Hash-Werte aus allen Hash-Werten wird bevorzugt teilautomatisiert oder automatisiert ausgeführt. So können beispielsweise bestimmte Dateiformate bestimmt werden, die für die Identität des Softwarepakets eine höhe Aussagekraft haben als andere Dateiformate. Als Beispiel könnten ausführbare Dateiformate eine besonders hohe Bedeutung für das Softwarepaket haben, da Veränderungen der ausführbaren Dateiformate einen klaren Hinweis auf Änderungen am Softwarepaket geben. Weiterhin kann eine Auswahl der Hash-Werte auch auf Basis einer Veränderung der digitalen Objekte über verschiedene Versionen des Softwarepakets durchgeführt werden. So werden als Ausgangslage zur Identifikation die digitalen Objekte ausgewählt, die über mehrere Versionen des Softwarepakets die geringsten Veränderungen aufweisen.

Beispielsweise, wenn man eine auf dem Windows-Betriebssystem aufsetzende Bedienoberfläche (HMI) betrachtet, die in der Programmiersprache C++ entwickelt wurde: Dateien mit der Endung .exe sind bestimmt, maschinenlesbar dem Prozessor direkt zugeführt zu werden. Dieser wird die in der .exe Datei Instruktionen mit den ebenfalls enthaltenen Daten direkt verarbeiten. Sollte sich in der Instruktionsfolge für den Prozess oder den Daten etwas geändert haben ist das funktional direkt bedeutsam für das Softwarepaket. Auch würde sich diese Datei ändern, wenn sie mit anderen Erstellungswerkzeugen gefertigt wurde, bspw. bei einem Wechsel der Software vom Betrieb auf 32-Bit System auf 64-Bit Prozessorsysteme. In diesem Fall muss sich funktional nichts ändern, aber es ist eindeutig eine andere Version der Software. Wenn hingegen Begleitkommentare oder Protokollierungsdateien sich verändert haben, dann kann das lediglich aus einer Betriebsdauer von zwei Stunden der identischen Software gegeben sein. Dies kann in einer Weiterbildung im erfindungsgemäßen Verfahren berücksichtigt werden.

Bevorzugt können die digitalen Objekte auch ohne die jeweiligen (für das digitale Objekt bereits vorhandenen) Metadatendateien verarbeitet werden, da die Signaturerzeugung auf dem Content des digitalen Objekts basiert und bevorzugt nicht auf vorhandene Metadaten zurückgreift. Dadurch kann eine manipulationssichere, fehlerfreie und objektive Signaturerstellung erreicht werden, da fehlerhafte oder manipulierte Metadaten nicht berücksichtigt werden. Dies sichert zu, dass in einer Flotte von in Betrieb befindlichen Systemen alle zur Identifikation und Prüfung erforderlichen Signaturen gewonnen werden können. Eine Zuordnung von Signaturen zu Metadaten oder Software- und Softwareversions-Kennungen kann somit auch nachträglich durchgeführt werden, auf Grundlage der über eine Systemflotte erhobenen Signaturdaten und den zuvor möglicherweise nicht explizit erstellten Zuordnungen der Auslieferzustände der Systeme. Zudem ergibt sich ein Sicherheitsaspekt, da über die erzeugte Signatur festgestellt werden kann, ob eine Abweichung der digitalen Objekte von der eigentlich zu erwartenden Signatur vorliegt und so kann auf eine Manipulation (z.B. Computersicherheit - erkennen ob Software gehackt wurde) geschlossen werden. Ebenso bieten auf diese Weise erhobene Sammlungen von Signaturdaten eine Grundlage für Analysen auf die Population der in Betrieb befindlichen Systeme, auf die Varianz ihrer Softwarekonstellationen oder Korrelationen mit anderweitig beobachteten Betriebseigenschaften oder Störungshäufungen.

In einem optionalen zusätzlichen Schritt können die digitalen Objekte vor der Verarbeitung für die Signaturerstellung bereinigt werden, sodass insbesondere LOG-Dateien gelöscht werden können. Eine schnellere und sicherere Verarbeitung kann dadurch erreicht werden.

Nach der Erzeugung der Hash-Werte, werden die Hash-Werte in Schritt **S103** zu einer Signatur des Softwarepakets zusammengefasst. Die Zusammenführung der Hash-Werte zu einer Signatur kann auf drei verschiedene Arten durchgeführt werden.

Im ersten Fall werden die Hash-Werte der digitalen Objekte des Softwarepakets als Hash-Tabelle abgespeichert. Die Signatur des Softwarepakets besteht somit aus den einzelnen Hash-Werten. Dieses Vorgehen ermöglicht einen besonders detaillierten Vergleich zweier Signaturen und eine genaue Analyse der Unterschiede.

Im zweiten Fall wird aus den Hash-Werten wiederum ein Gesamt-Hash-Wert erzeugt. In diesem Fall besteht die Signatur somit nur aus dem Gesamt-Hash-Wert. Dies kann einen späteren Vergleich zweier Signaturen besonders einfach und effizient gestalten.

In einer dritten Variante wird ebenfalls ein Gesamt-Hash-Wert erzeugt, aber im Vergleich zum zweiten Fall sowohl der Gesamt-Hash-Wert als auch die einzelnen Hash-Werte der digitalen Objekte als Signatur abgespeichert. Auf diese Weise lassen sich die Vorteile der beiden vorangegangen Methoden kombinieren.

Zusätzlich zu den Hash-Werten nach einer der vorangegangen Varianten können zusätzliche Daten in der Signatur abgespeichert werden. Dies wird ebenfalls in Figur 3 schematisch dargestellt. So können beispielsweise ein Name, eine Versionskennung oder ein Inhalt des Softwarepakets in Form von Metadaten in der Signatur abgespeichert werden (Auch bspw. mit Buchstaben oder alphanumerischen Kennungen kann dieses Verfahren umgesetzt werden). Diese Daten können beispielsweise genutzt werden, um zu entscheiden welche Signaturen miteinander verglichen werden sollten, oder um bei einem festgestellten Unterschied zweier Signaturen festzustellen, ob es sich vor dem Hintergrund unterschiedlicher Zielsetzungen durchgeführter Betrachtungen um das gleiche oder unterschiedliche Softwarepakete handeln sollte. Bevorzugt kann nach der Inbetriebnahme, vor Auslieferung einer Maschine, geprüft werden, ob die korrekte Software eingebracht ist und auch korrekt parametriert wurde. Vorteilhaft kann man daher durch diesen optionalen Schritt eine effiziente Prüfung vor der Auslieferung erreichen. In einem weiteren Beispiel, kann in einem Service-Vorfall die Konfigurationsinformation der Software auch ignoriert werden.

Nach der Erstellung der Signatur kann die Signatur auf verschiedenste Weisen abgelegt bzw. abgespeichert werden. So kann die Signatur beispielsweise auf einem Server des Softwareerstellers abgespeichert werden. Weiterhin kann die Signatur in einem Speicher abgelegt werden, auf dem auch das Softwarepaket selbst installiert ist. Der Speicher kann sich beispielsweise in einer Steuerung einer Werkzeugmaschine befinden. Weiterhin können die Signaturen auf einem lokalen Computer abgelegt werden, der mit dem Speicher verbunden werden kann, auf dem ein oder mehrere Softwarepakete installiert sind.

Nachdem die Signatur abgespeichert wurde, kann sie verwendet werden, um sie mit einer anderen Signatur, die auf die gleiche Weise erstellt wurde, zu vergleichen. Dieser Vergleich wird in Schritt **S104** durchgeführt. Dabei ist der Zeitpunkt, an welchem der Vergleich durchgeführt wird, nicht beschränkt. So kann beispielsweise der Vergleich direkt nach einer Installation des Softwarepakets durchgeführt werden, um eine korrekte Installation sicherzustellen. Weiterhin kann der Vergleich auch periodisch durchgeführt werden, etwa um festzustellen, ob ein Softwarepaket modifiziert wurde, oder ob ein Softwarepaket in der aktuellen Version installiert ist.

Wie der Vergleich durchgeführt wird, hängt dabei von der Art der Signatur ab. Wurde für die Signatur nur ein einzelner Gesamt-Hash-Wert abgespeichert, ist ein Einzelvergleich zweier Hash-Werte notwendig. Das Ergebnis dieses Vergleichs ist dann, dass die zugehörigen Softwarepakete identisch sind, oder nicht identisch sind. Diese Art der Signatur eignet sich somit nur zu reinen Integritätsfeststellung und Identifizierung. Bevorzugt kann in einer Ausführungsform jedes Detailobjekt einzeln gelistet und in der Signatur abgebildet werden, mit einer bspw. manuell oder automatisiert durchgeführten Auswahl der relevanten Teilmengen an Signaturen. Bei komplexen Softwarekonstellationen kann, zur Reduktion der Beeinflussung der Laufzeiteigenschaften des Systems, nachträglich auf die zusammengefassten Signaturen umgestellt werden. Alle dazu benötigten Daten können in einer zentralen Datenbank vorliegen (vorab abgespeichert) und man muss dazu nicht die gelieferten Systeme erreichen.

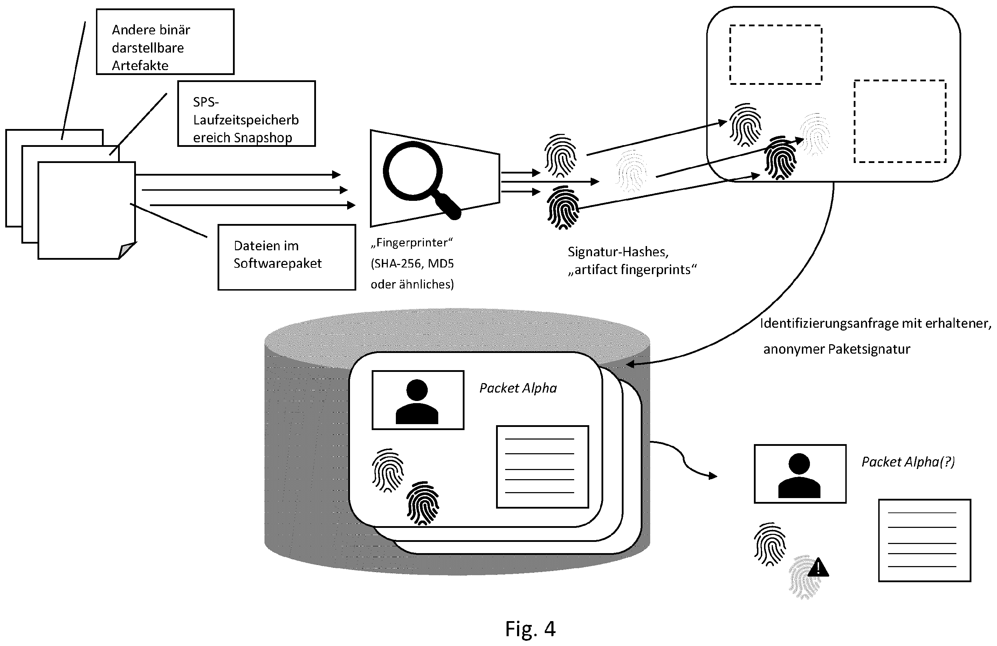

Alternativ, wenn die einzelnen Hash-Werte der digitalen Objekte der Softwarepakete als Signatur abgespeichert wurden, müssen alle Hash-Werte einer Signatur mit allen Hash-Werten der anderen Signatur verglichen werden. Das Ergebnis dieses Vergleichs gibt dann Aufschluss darüber, wie groß die Unterschiede zwischen den beiden Softwarepakten sind. Somit kann nachvollzogen werden, welche digitalen Objekte, beispielsweise Dateien, verändert oder ausgetauscht wurden. Dieser Art des Vergleichs wird schematisch in Figur 4 dargestellt.

Weiterhin können die oben beschriebenen Vergleiche kombiniert werden, wenn sowohl ein Gesamt-Hash-Wert als auch die Hash-Werte der einzelnen digitalen Objekte als Signatur abgespeichert wurden. In diesem Fall findet erst ein Vergleich der beiden Gesamt-Hash-Werte statt, und nur bei Ungleichheit werden die einzelnen Hash-Werte miteinander verglichen.

Der Vergleich der Hash-Werte kann für unterschiedliche Zwecke verwendet werden. So kann die Integrität eines Softwarepakets festgestellt werden, um beispielsweise eine Modifikation einzelner digitaler Objekte im Softwarepaket festzustellen. Weiterhin kann der Vergleich verwendet werden, um Mehrfachinstallationen des gleichen Softwarepakets oder unterschiedlicher Versionen eines Softwarepakets festzustellen. Weiterhin kann der Vergleich genutzt werden, um eine Version des Softwarepakets festzustellen.

Vorteilhaft kann wobei der Vergleich der ersten Signatur mit der zweiten Signatur einem oder mehreren der folgenden Zwecke dienen: Integritätsprüfung des ersten Softwarepakets; Versionserkennung des ersten Softwarepakets; Versionszuordnung des ersten Softwarepakets; Erkennung von Mehrfachinstallationen des gleichen Softwarepakets; und/oder Erkennung von Installationen verschiedener Versionen des gleichen Softwarepakets.

Die Versionsüberprüfung über die Signatur kann zusätzlich verwendet, um einen effizienten Updateprozess des Softwarepakets durchzuführen. Wird bei der Versionsüberprüfung festgestellt, dass es sich nicht um die aktuelle Version des Softwarepakets handelt, können über die Hash-Werte des aktuellen Softwarepakets (beispielsweise auf einem Server gespeichert), die nicht mit den Hash-Werten des überprüften Softwarepakets übereinstimmen, die Dateien ermittelt werden, in denen sich die aktuelle Version und die alte Version des Softwarepakets unterscheiden. Somit können ausschließlich die Dateien für den Updateprozess bereitgestellt werden, die sich tatsächlich in beiden Versionen des Softwarepakets unterscheiden. Auf diese Weise kann ein Updateprozess sehr effizient durchgeführt werden, und nur die minimal notwendige Datenmenge muss übertragen werden. Die Identifikation der notwendigen Daten wurde somit automatisiert.

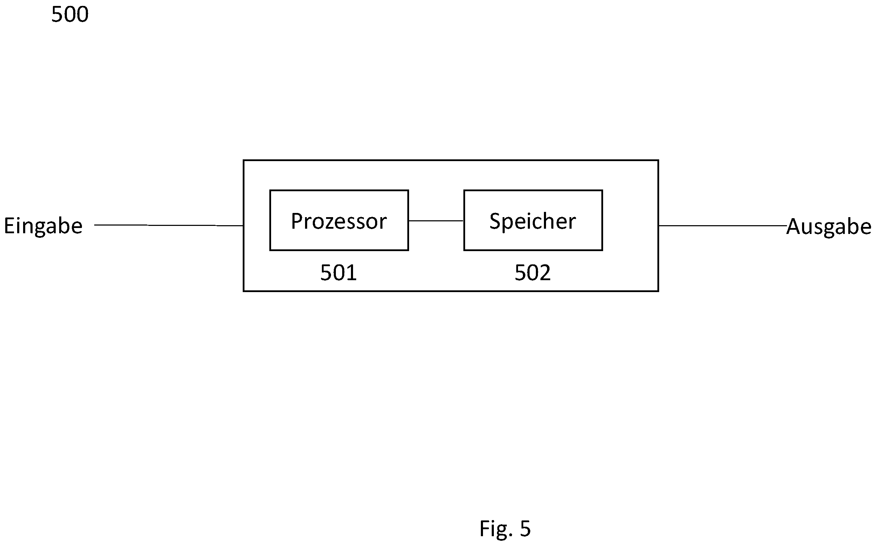

Während oben ein Verfahren zur Erzeugung und zum Vergleich von Signaturen für Softwarepakte beschrieben wurde, bezieht sich die Offenbarung auch auf entsprechende Vorrichtungen. Eine Ausführungsform, die eine solche Vorrichtung bereitstellt, wird im Folgenden unter Bezugnahme auf Figur 5 beschrieben.

Wie in Figur 5 dargestellt, umfasst die Vorrichtung 500 einen Prozessor 501 und einen Speicher 502. Der Speicher 502 ist so konfiguriert, dass er Programmcode speichert. Der Prozessor 501 ist so konfiguriert, dass er Anweisungen im Programmcode ausführt, so dass die Vorrichtung 500 die Erzeugung und den Vergleich der Softwaresignaturen in einer der oben genannten Ausführungsformen und Implementierungen durchführt. Der Prozessor 501 kann unter anderem auch geeignete Eingabedaten empfangen (z. B. Dateien und Speicherabbilder), abhängig von Anwendungsfällen und/oder Implementierungen. Der Prozessor 501 kann so ausgelegt sein, dass er die in der vorliegenden Offenbarung beschriebenen Verfahren (z. B. das Verfahren 100, wie oben unter Bezugnahme auf die Figuren 1 bis 4 dargestellt) ausführt und entsprechende Ausgabedaten (z. B. die erzeugte Signatur oder das Ergebnis des Vergleichs zweier Signaturen) erzeugt, je nach Anwendungsfällen und/oder Implementierungen. Die Vorrichtung kann Teil eines Servers sein, der mit einem Speicher verbunden ist, auf dem sich das Softwarepaket befindet. Alternativ kann die Vorrichtung auch Teil eines lokalen Computers sein, der mit einem Speicher, beispielsweise der Steuerung einer Werkzeugmaschine, auf der das Softwarepaket installiert ist, verbunden werden kann. Weiterhin ist es möglich, dass die Vorrichtung Teil eines Systems der Steuerung einer Werkzeugmaschine selbst ist, sofern diese sich für eine dahingehende Systemintegration eignet.

Vorliegende Merkmale, Komponenten und spezifische Details können ausgetauscht und/oder kombiniert werden, um weitere Ausführungsformen zu erstellen, in Abhängigkeit des geforderten Verwendungszwecks. Etwaige Modifikationen, die im Bereich des Wissens des Fachmanns liegen, werden mit der vorliegenden Beschreibung implizit offenbart.

## Patentansprüche

1. Computerimplementiertes Verfahren zur Erzeugung und zum Vergleich von Signaturen von Softwarepaketen, das Verfahren umfassend die Schritte:
- Bestimmen von digitalen Objekten die zu einem ersten Softwarepaket gehören;
- Erzeugen von Hash-Werten der digitalen Objekte, wobei ein Hash-Wert einem digitalen Objekt entspricht;
- Zusammenführen der Hash-Werte zu einer ersten Signatur des ersten Softwarepakets;
- Vergleichen der ersten Signatur mit einer zweiten Signatur, wobei die zweite Signatur eine Signatur für ein zweites Softwarepaket ist.

2. Computerimplementiertes Verfahren nach Anspruch 1, wobei ein digitales Objekt eine Datei, ein SPS-Speicherabbild, HMI-Speicherabbild, CNC-Speicherabbild und/oder sonstige binär repräsentierbare Daten des ersten Softwarepakets umfasst.

3. Computerimplementiertes Verfahren nach Anspruch 2, wobei das SPS-Speicherabbild, das HMI-Speicherabbild und das CNC-Speicherabbild ausschließlich ein Teilspeicherabbild eines entsprechenden gesamten Speicherabbilds umfasst; und/oder wobei das Teilspeicherabbild basierend auf vordefinierten Regeln ausgewählt wird und die vordefinierten Regeln auf einem Verwendungszweck verschiedener Teilbereiche eines Speicherabbilds für das Softwarepaket beruhen.

4. Computerimplementiertes Verfahren nach einem der vorhergehenden Ansprüche, wobei es sich beim ersten und zweiten Softwarepaket um eine Steuerungssoftware für eine Werkzeugmaschine handelt und/oder einer Automationseinrichtung zur Beschickung von Werkzeugmaschinen.

5. Computerimplementiertes Verfahren nach Anspruch 4, wobei das Bestimmen der digitalen Objekte, die zum ersten Softwarepaket gehören ein Extrahieren der digitalen Objekte aus einer Steuereinheit der Werkzeugmaschine umfasst; und/oder wobei das Bestimmen der digitalen Objekte die zum ersten Softwarepaket gehören ein Auslesen der digitalen Objekte aus einem Datenspeicher auf dem das Softwarepaket gespeichert ist umfasst.

6. Computerimplementiertes Verfahren nach einem der vorhergehenden Ansprüche, wobei das Erzeugen der Hash-Werte der digitalen Objekte folgendes umfasst:
- Auswählen einer Teilmenge der digitalen Objekte, wobei die Auswahl auf einer Relevanz der digitalen Objekte für das erste Softwarepaket basiert;
- Erzeugen des Hash-Wertes für jedes digitale Objekt in der Teilmenge.

7. Computerimplementiertes Verfahren nach Anspruch 6, wobei die Relevanz basierend auf einer Art des digitalen Objekts und/oder einer Varianz des digitalen Objekts über verschiedene Versionen des ersten Softwarepakets bestimmt wird
und/oder, wobei das Erzeugen der Hash-Werte der digitalen Objekte eine Anwendung eines Hash-Algorithmus auf die digitalen Objekte umfasst und wobei der Hash-Algorithmus bevorzugt mindestens eines der folgenden Verfahren umfasst: MD-5, RIPEMD-160, SHA oder Whirlpool.

8. Computerimplementiertes Verfahren nach einem der vorhergehenden Ansprüche, wobei das Zusammenführen der Hash-Werte zur ersten Signatur des ersten Softwarepakets folgendes umfasst:
Erzeugen der ersten Signatur indem die Hash-Werte als Hash-Tabelle abgespeichert werden; und/oder
wobei das Zusammenführen der Hash-Werte zur ersten Signatur des ersten Softwarepakets weiterhin ein Erzeugen von Metadaten für die erste Signatur umfasst.

9. Computerimplementiertes Verfahren nach Anspruch 8, wobei die Metadaten eine Kennung, eine Versionsnummer oder eine Inhaltsangabe des ersten Softwarepakets umfassen und/oder wobei die Metadaten aus den digitalen Objekten ermittelt werden; und/oder
wobei die zweite Signatur aus dem zweiten Softwarepaket analog zur ersten Signatur aus dem ersten Softwarepaket gemäß einer der Ansprüche 1 bis 8 erzeugt wurde; und/oder wobei die zweite Signatur sich auf einem Server, oder einem lokalen Computer befindet, und der Server oder der lokale Computer mit einem Gerät verbunden werden kann, auf dem sich das erste Softwarepaket befindet.

10. Computerimplementiertes Verfahren nach einem der vorhergehenden Ansprüche, wobei das erste Softwarepaket und das zweite Softwarepaket eine der folgenden Verhältnisse aufweisen:
- das erste Softwarepaket und das zweite Softwarepaket sind identisch;
- das erste Softwarepaket ist eine manipulierte Variante des zweiten Softwarepakets;
- das erste Softwarepaket und das zweite Softwarepaket sind verschiedene Versionen eines Softwarepakets;
- das erste Softwarepaket ist eine modifizierte Variante des zweiten Softwarepakets; oder
- das erste Softwarepaket und das zweite Softwarepaket haben keine Gemeinsamkeiten.

11. Computerimplementiertes Verfahren nach Anspruch 10, wobei das Vergleichen der ersten Signatur mit der zweiten Signatur folgendes umfasst:
Vergleichen jedes Hash-Werts der ersten Signatur mit jedem Hash-Wert der zweiten Signatur.

12. Computerimplementiertes Verfahren nach Anspruch 11, wobei das Verfahren weiterhin umfasst:
Ausgabe einer Übereinstimmung der Hash-Werte der ersten Signatur mit den Hash-Werten der zweiten Signatur.

13. Computerimplementiertes Verfahren nach Anspruch 12, wobei das Verfahren, wenn bei der Versionserkennung festgestellt wird, dass das zweite Softwarepaket eine aktuellere Version des ersten Softwarepakets ist, weiterhin umfasst:
Updaten des erstes Softwarepakets auf das zweite Softwarepakets basierend auf der Ausgabe der Übereinstimmung der Hash-Werte der ersten Signatur mit den Hash-Werten der zweiten Signatur; und
wobei das Updaten des erstes Softwarepakets vorzugsweise ausschließlich mit digitalen Objekten ausgeführt wird, die den Hash-Werten der zweiten Signatur entsprechen, die ungleich den Hash-Werten der ersten Signatur sind.

14. Vorrichtung, die einen Prozessor und einen mit dem Prozessor gekoppelten Speicher umfasst, wobei der Prozessor so ausgelegt ist, dass er das Verfahren nach einem der Ansprüche 1 bis 13 ausführt.

15. Computerprogramm mit Anweisungen, die, wenn sie von einem Prozessor ausgeführt werden, den Prozessor veranlassen, das Verfahren nach einem der Ansprüche 1 bis 13 auszuführen.
